**Europäisches Patentamt**

**European Patent Office**

**Office européen des brevets**

(19)

(11) Veröffentlichungsnummer: **0 253 414**
**B1**

(12)

# EUROPÄISCHE PATENTSCHRIFT

(45) Veröffentlichungstag der Patentschrift:
**24.10.90**

(51) Int. Cl.⁵: **B23K 7/10, B22D 11/126**

(21) Anmeldenummer: **87112722.1**

(22) Anmeldetag: **13.04.85**

(60) Veröffentlichungsnummer der früheren Anmeldung
nach Art. 76 EPÜ: **0162275**

(54) **Brennschneidmaschine mit Haupt- und verschiebbarem Anklemm- und Schneidrahmen.**

(30) Priorität: **24.04.84 DE 8412636 U**

(73) Patentinhaber: **AUTE Gesellschaft für autogene Technik
mbH, Wassbergstrasse 28, CH-8127 Forch/ZH(CH)**

(72) Erfinder: **Lotz, Horst K., Fasanenweg 7,
D-6240 Königstein-Johanniswald(DE)**

(74) Vertreter: **Blumbach Weser Bergen Kramer Zwirner
Hoffmann Patentanwälte, Sonnenberger Strasse 100,
D-6200 Wiesbaden 1(DE)**

(43) Veröffentlichungstag der Anmeldung:
**20.01.88 Patentblatt 88/3**

(45) Bekanntmachung des Hinweises auf die Patenterteilung:
**24.10.90 Patentblatt 90/43**

(84) Benannte Vertragsstaaten:
**AT BE CH DE FR GB IT LI LU NL SE**

(56) Entgegenhaltungen:
**AT-B- 323 519**
**DE-A- 2 927 311**
**DE-A- 3 035 239**
**US-A- 3 443 805**

## Beschreibung

Die Erfindung betrifft eine Strangbrennschneidmaschine zum thermischen Trennen von heißen, leicht ausknickenden und mit an- und abschwellender Geschwindigkeit oder mit wechselnder Bewegungsrichtung waagrecht geförderter Stränge mit einem auf einer Laufbahn parallel zum Strang bewegbaren Brennerwagen, dessen Bewegung mit dem Strang während des Schneidvorgangs durch eine am Strang angreifende Anklemmeinrichtung sichergestellt ist.

Bei derartigen Maschinen, die z.B. aus DE-A1 2 927 311 oder DE-A1 3 035 239 bekannt sind, bereitet es Schwierigkeiten, die Strangbrennschneidmaschine sich ändernden Geschwindigkeiten sowie wechselnden Bewegungsrichtungen des Strangs genau anzupassen, um einen einwandfreien Schneidvorgang zu gewährleisten.

Der Erfindung liegt daher die Aufgabe zugrunde, eine Strangbrennschneidmaschine der eingangs genannten Art verfügbar zu machen, bei der eine einwandfreie Anpassung an wechselnde Geschwindigkeiten und Bewegungsrichtungen des Strangs gegeben ist.

Die Erfindung besteht darin, daß die Brennschneidmaschine in einen Hauptrahmen und einen auf diesem, parallel zum Hauptrahmen, verschiebbaren Anklemm- und Schneidrahmen aufgeteilt ist, daß der Anklemm- und Schneidrahmen den Schneidbrenner und eine Anklemmeinrichtung trägt und daß der Hauptrahmen mit einem eigenen Antrieb dem Anklemm- und Schneidrahmen nachfährt.

Gemäß einer zweckmäßigen Ausführungsform ist vorgesehen, daß der Antrieb des Hauptrahmens diesen auf der Brennerlaufbahn dem mit dem Strang verbundenen Anklemm- und Schneidrahmen nachfährt, der auf dem Hauptrahmen montiert ist. Um ein Verkanten der Brennschneidmaschine zu verhindern, ist es vorgesehen, daß jeder Klemmhebel mit zwei Kontaktpunkten pro Seite am Strang zur Anlage kommt. Dabei sind vorzugsweise die Anklemmhebel durch einen Balgzylinder betätigbar.

Auf diese Art und Weise ist es gemäß der Aufgabenstellung der Erfindung möglich, das Trennen von heißen, leicht ausknickenden Strängen mit an- und abschwellender Geschwindigkeit oder mit wechselnder Bewegungsrichtung durchzuführen.

Die Erfindung soll nachstehend anhand von Ausführungsbeispielen unter Bezugnahme auf die beigefügten Zeichnungen näher erläutert werden. In den Zeichnungen zeigen:

Fig. 1 die Seitenansicht einer Brennschneidmaschine,

Fig. 2 eine Seitenansicht, teilweise im Schnitt, und

Fig. 3 eine Draufsicht auf eine Brennschneidmaschine nach Fig. 2.

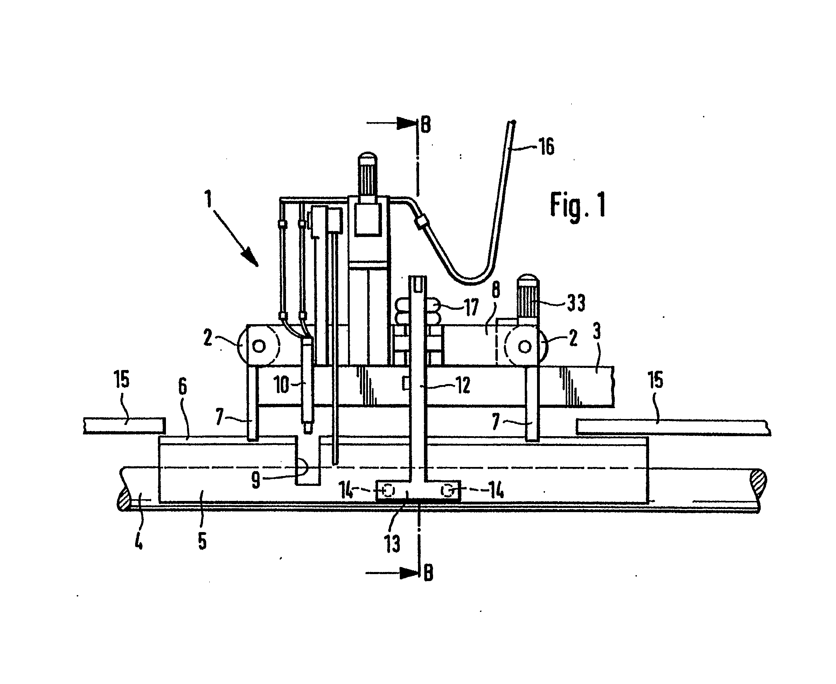

In Fig. 1 ist eine Brennschneidmaschine 1 dargestellt, die mit Rädern 2 sich längs einer Brennerwagenlaufbahn 3 bewegt. Die Brennerwagenlaufbahn 3 verläuft parallel zu einem Strang 4, der im Bereich der Brennschneidmaschine 1 mit einer Schutzhaube 5 zum Wärme- und Strahlungsschutz abgedeckt ist. Die Schutzhaube 5 ist an einem Halter 6 befestigt, der über Verbindungsträger 7 am Hauptrahmen 8 der Brennschneidmaschine 1 befestigt ist. Auf diese Weise bewegt sich die Schutzhaube 5 synchron mit der Brennschneidmaschine 1. Um einen unötigen Temperaturverlust zu vermeiden, sind an beiden Seiten Warmhaltehauben 15 vorgesehen, zwischen denen sich die Schutzhaube 5 überlappend und teleskopartig hin- und herbewegt. In der Schutzhaube 5 ist eine Durchbrechung 9 vorgesehen, durch die sich der Brenner 10 bewegt, und durch eine Durchbrechung 11 erstreckt sich ein Anklemmhebel 12, der eine Klemmbacke 13 aufweist, die mit zwei Kontaktvorsprüngen 14 am Strang 4 zur Anlage kommt, so daß ein Verkanten der Brennschneidmaschine 1 verhindert ist. Die Brennschneidmaschine wird durch Versorgungsschläuche 16 betrieben, und ein Balgzylinder 17 ist vorgesehen zur Betätigung der Klemmhebel 12.

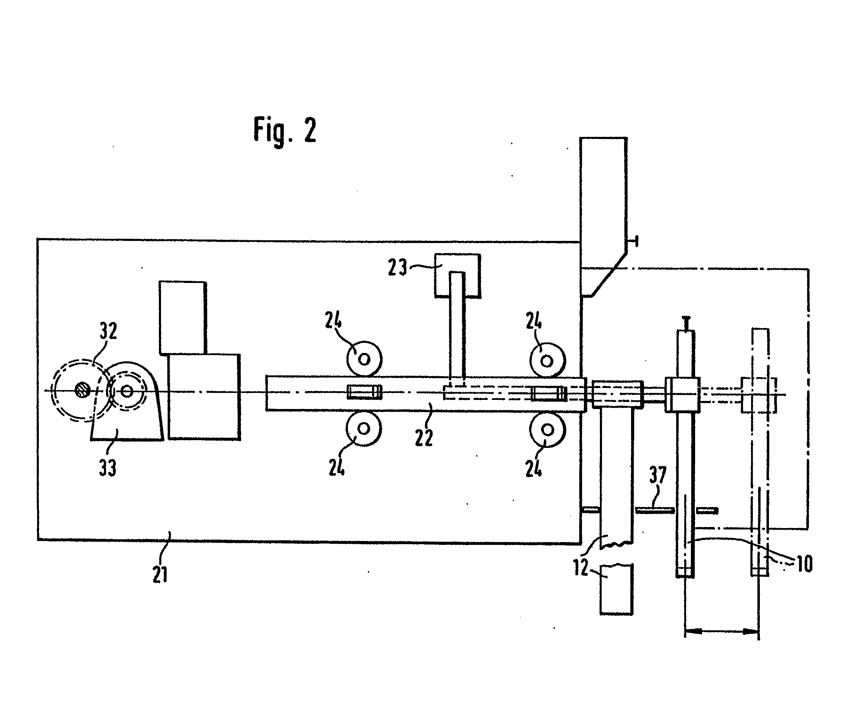

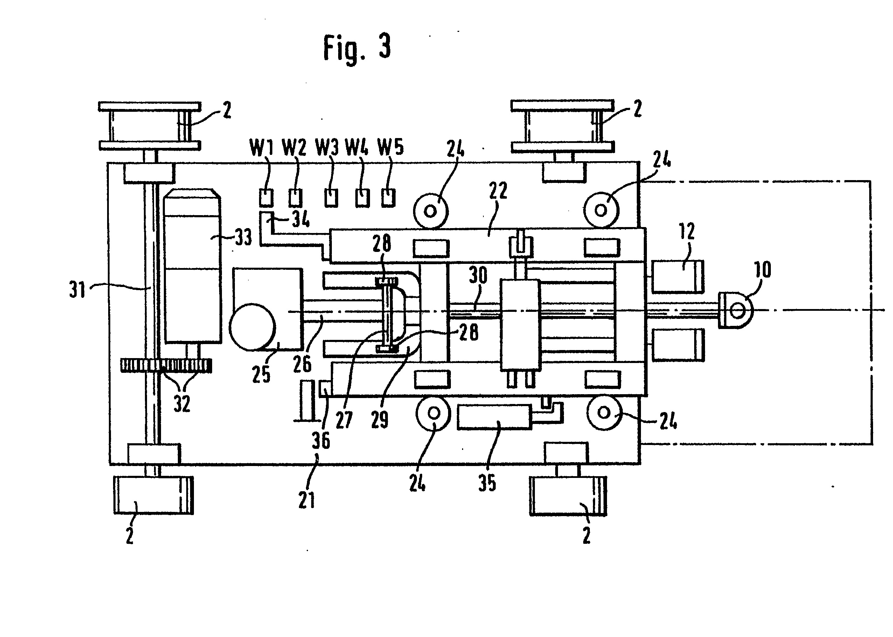

Die die Fig. 2 und 3 näher zeigen, ist zur besseren Anpassung an sich ändernde Geschwindigkeiten sowie wechselnde Bewegungsrichtungen des Stranges vorgesehen, daß die Brennschneidmaschine 1 einen Hauptrahmen 21 aufweist.

Die vorstehend beschriebene Brennschneidmaschine erlaubt in einwandfreier Weise ein thermisches Trennen von heißen, leicht ausknickenden, mit an- und abschwellender Geschwindigkeit oder mit wechselnder Bewegungsrichtung waagrecht geförderter Stränge, wobei die Abstände zweier parallel verlaufender Stränge kleiner als 900 mm sein können. Die Brennschneidmaschine ist verhältnismäßig kostengünstig und ermöglicht, soweit es erforderlich ist, eine einfache Wartung.

## Patentansprüche

1. Strangbrennschneidmaschine zum thermischen Trennen von heißen, leicht ausknickenden und mit an- und abschwellender Geschwindigkeit oder mit wechselnder Bewegungsrichtung waagrecht geförderter Stränge (4) mit einem auf einer Laufbahn (3) parallel zum Strang bewegbaren Brennerwagen, dessen Bewegung mit dem Strang (4) während des Schneidvorgangs durch eine am Strang (4) angreifende Anklemmeinrichtung (12–14, 17) sichergestellt ist, dadurch gekennzeichnet, daß die Brennschneidmaschine (1) in einen Hauptrahmen (21) und einen auf diesem (1) verschiebbaren Anklemm- und Schneidrahmen (22) aufgeteilt ist, daß der Anklemm- und Schneidrahmen (22) den Schneidbrenner (10) und eine Anklemmeinrichtung (12–14, 17) trägt und daß der Hauptrahmen (21) mit einem eigenen Antrieb (33) dem Anklemm- und Schneidrahmen (22) nachfährt.

2. Brennschneidmaschine nach Anspruch 1, dadurch gekennzeichnet, daß der Antrieb (33) des Hauptrahmens (21) diesen auf der Brennerlaufbahn (3) dem mit dem Strang (4) verbundenen Anklemm- und Schneidrahmen (22) nachfährt, der auf dem Hauptrahmen (21) montiert ist.

3. Brennschneidmaschine nach Anspruch 2, dadurch gekennzeichnet, daß durch eine Mitnahmeeinrichtung (35) der Anklemm- und Schneidrahmen (22) den Brennerwagen mitbewegt, wenn der Antrieb für den Hauptrahmen (21) ausfällt.

4. Brennschneidmaschine nach einem der Ansprüche 1 bis 3, dadurch gekennzeichnet, daß jeder Klemmhebel (12, 13) mit zwei Kontakpunkten (14) pro Seite am Strang (4) zur Anlage kommt, um ein Verkanten der Brennschneidmaschine (1) zu verhindern.

5. Brennschneidmaschine nach einem der Ansprüche 1 bis 4, dadurch gekennzeichnet, daß die Anklemmhebel (12) durch einen Balgzylinder (17) betätigbar sind.

## Claims

1. A billet flame-cutting machine for the thermal separation of hot readily buckling billets (4) conveyed horizontally with an increasing and decreasing speed or with a varying direction of movement, comprising a torch carriage movable on a track (3) parallel to the billet, the movement of said carriage together with the billet (4) during the cutting operation being ensured by a clamping device (12–14, 17) acting on the billet (4), characterised in that the flame-cutting machine (1) is divided up into a main frame (21) and a clamping and cutting frame (22) which is slidable thereon parallel to the main frame (21), in that the clamping and cutting frame (22) carries the cutting torch (10) and a clamping device (12–14, 17), and in that the main frame (21) having its own drive (33) follows the clamping and cutting frame (22).

2. A flame-cutting machine according to claim 1, characterised in that the drive (33) for the main frame (21) drives the latter on the torch track (3) to follow the clamping and cutting frame (22) connected to the billet (4), said clamping and cutting frame (22) being mounted on the main frame (21).

3. A flame-cutting machine according to claim 3, characterised in that an entraining means (35) of the clamping and cutting frame (22) moves the torch carriage as well in the event of breakdown of the drive for the main frame (21).

4. A flame-cutting machine according to any one of claims 1 to 3, characterised in that each clamping lever (12, 13) comes into contact with two contact points (14) on each side of the billet (4) to prevent any tilting of the flame-cutting machine (1).

5. A flame-cutting machine according to any one of claims 1 to 4, characterised in that the clamping levers (12) are adapted to be actuated by a bellows cylinder (17).

## Revendications

1. Machine d'oxycoupage de barres pour le découpage thermique de barres chaudes (4) déplacées horizontalement, en légère inflexion et à une vitesse croissante et décroissante ou suivant un déplacement en va et vient, ladite machine comportant un chariot porte-chalumeau mobile sur une voie (3) parallèle à la barre, dont le déplacement solidaire de celui de la barre (4) au cours du découpage est assuré par un dispositif de serrage (12–14, 17) de la barre (4), caractérisée par le fait que la machine d'oxycoupage (1) est composée d'un bâti principal (21) et d'un bâti de serrage et de découpage (22) mobile sur le bâti principal (21) parallèlement à lui, que le bâti de serrage et de découpage (22) porte le chalumeau de découpe (10) et un dispositif de serrage (12–14, 17), et que le bâti principal (21) suit le mouvement du bâti de serrage et de découpage (22) grâce à sa propre commande (33).

2. Machine d'oxycoupage selon la revendication 1, caractérisée par le fait que la commande (33) du bâti principal (21) suit, sur la voie (3) du chalumeau, le bâti de serrage et de découpage (22) relié à la barre (4) et qui est monté sur le bâti principal (21).

3. Machine d'oxycoupage selon la revendication 2, caractérisée par le fait que, grâce à un dispositif d'entraînement (35), le bâti de serrage et de découpage (22) entraîne le chariot porte-chalumeau, lorsque la commande du bâti principal (21) ne fonctionne pas.

4. Machine d'oxycoupage selon l'une quelconque des revendications 1 à 3, caractérisée par le fait que chacun des leviers de serrage (12, 13) vient en appui sur deux points de contact (14) sur la barre (4) de chaque côté de celle-ci, pour empêcher que la machine d'oxycoupage (1) ne se coince.

5. Machine d'oxycoupage selon l'une quelconque des revendications 1 à 4, caractérisée par le fait que les leviers de serrage (12) sont manœuvrables par un vérin pneumatique (17).

Fig. 1

EP 0 253 414 B1

Fig. 2

Fig. 3